# EUROPEAN PATENT SPECIFICATION

(11) **EP 0 490 048 B1**
(45) Date of publication and mention of the grant of the patent: **13.08.1997**
(21) Application number: 91117413.4
(22) Date of filing: 11.10.1991
(51) Int. Cl.: H01M 10/40

(54) **Non-aqueous electrolyte cell**
Zelle mit nichtwässrigem Elektrolyten
Pile à électrolyte non aqueux

(30) Priority: 12.12.1990 JP 401667/90
(43) Date of publication of application: 17.06.1992
(73) Proprietor: SANYO ELECTRIC CO., LIMITED., Moriguchi City, Osaka (JP)
(72) Inventor: Takahashi, Masatoshi, Neyagawa-shi, Osaka (JP); Yoshimura, Seiji, Hirakata-shi, Osaka (JP); Furukawa, Nobuhiro, Hirakata-shi, Osaka (JP)
(74) Representative: Glawe, Delfs, Moll & Partner

(56) References cited:
- EP-A- 0 312 236
- EP-A- 0 486 950
- FR-A- 2 641 130
- US-A- 4 056 663
- PATENT ABSTRACTS OF JAPAN vol. 10, no. 228 (E-426)(2284) 8 August 1986 & JP-A-61064082
- PATENT ABSTRACTS OF JAPAN vol. 14, no. 154 (E-907)(4097) 23 March 1990 & JP-A-2 012 777
- PATENT ABSTRACTS OF JAPAN vol. 14, no. 151 (E-090)22 March 1990 & JP-A-2 010 666

## Description

### BACKGROUND OF THE INVENTION

### 1) Field of the Invention

The present invention relates to a non-aqueous electrolyte cell comprising a positive electrode, a negative electrode and a non-aqueous electrolyte consisting of a solute and an organic solvent.

### 2) Description of the Prior Art

A non-aqueous electrolyte cell in which a negative electrode has lithium or a lithium alloy as an active material provides advantages of high energy density and low self-discharge rate.

A low boiling point solvent such as dimethoxyethane or dioxolane has been conventionally used as a solvent of an electrolyte. However, this gives rise to the problem that the solvent reacts with lithium to form a film, which is inactive and has a low conductivity, on the surface of the negative electrode. This causes an increase in the internal resistance of the cell, resulting in a decline in the cell performance during the life time of the cell (especially of the high rate discharge characteristics).

In order to solve the above problem, it has been proposed to employ a solvent mixture of a cyclic carbonate and a low boiling point solvent to form a film of Li₂CO₃ having a high conductivity on the surface of the negative electrode, thereby improving the life time.

However, lithium reacts, though very slightly, with a low boiling point solvent, and an inactive film (Li₂O) is formed on the surface of the negative electrode. This decreases the high rate discharge characteristics after a long storage period.

As another method for solving the problem, a non-aqueous electrolyte cell using a solvent mixture of a cyclic carbonate and an non-cyclic carbonate has been developed.

For example, a cell disclosed in JP-A 61064082 includes LiCF₃SO₃ as a solute and a solvent mixture of a cyclic carbonate (PC) and a non-cyclic carbonate (DEC). The non-aqueous electrolyte secondary cell of FR-A-2641130 also uses a solvent mixture of a cyclic carbonate and a non-cyclic carbonate.

As described above, it is possible to improve the high rate discharge characteristics by using a solvent mixture of a cyclic carbonate and a non-cyclic carbonate to form a film of Li₂CO₃, which does not increase the internal resistance of the cell, on the surface of the negative electrode. With such arrangement, the life time is improved, the formation of a Li₂O film can be prevented, and the high rate discharge characteristics after a long storage period is improved.

However, a further techique is sought for improving the amount of discharge after a long storage period.

EP-A-0 486 950 discloses another non-aqueous electrolyte cell. Especially, this document shows a non-aqueous electrolyte secondary battery is essentially comprising of a negative electrode which comprises a carbonaceous material capable of doping and de-doping lithium, a positive electrode made of an active material which comprises a Li-containing metal complex oxide of the general formula LiₓMO₂, wherein M represents at least one member selected from the group consisting of Co, Ni and Mn and 0.5 ≤ x ≤ 1, and a non-aqueous electrolyte which contains an electrolyte and an organic solvent therefor. The organic solvent is a mixed solvent of propylene carbonate and at least one member selected from the group consisting of diethyl carbonate and dipropyl carbonate.

Since this document with the priority dated 17.11.1990 has been published on 27.5.1992 it constitutes state of the art only under article 54(3) (4)EPC.

### SUMMARY OF THE INVENTION

An object of the present invention, therefore, is to provide a non-aqueous electrolyte cell capable of drastically improving a high rate discharge characteristic after storage as well as before storage.

Another object of the present invention is to provide a non-aqueous electrolyte cell capable of improving a charge and discharge cycle characteristic before and after storage when used as a secondary cell.

Still another object of the present invention, therefore, is to provide a non-aqueous electrolyte cell with the improved amount of discharge having high stability after a long storage period.

The above objects are achieved by a non-aqueous electrolyte cell according to claim 1, a dischargeable non-aqueous electrolyte primary cell according to claim 4 and a rechargeable non-aqueous electrolyte secondary cell according to claim 6. The dependent claims are related to different developments of the present invention.

The above objects are fulfilled for the following reasons:

A storage characteristic in a non-aqueous electrolyte cell is deteriorated since a film having a low conductivity is generated by reaction between lithium and a solvent during long-term storage. When the solvent comprises a cyclic carbonate such as propylene carbonate or ethylene carbonate, a film of Li₂CO₃, which does not increase the internal resistance of the cell, is formed on the negative electrode, whereby the storage characteristic can be improved.

However, if the solvent consists of a cyclic carbonate only, the high rate discharge characteristic is deteriorated due to high viscosity of the electrolyte. Therefore, a solvent mixture of a cyclic carbonate and a low boiling point solvent having a low viscosity such as dimethoxyethane or dioxolane is generally used. However, such a solvent mixture also has a problem that reaction between lithium and the low boiling point solvent is inevitable after long term storage although the high rate discharge characteristic is improved. The reaction forms an inactive film of Li₂O, whereby the high rate discharge characteristic is deteriorated after long term storage.

In order to solve the above problems, the present invention employs a solvent mixture of a cyclic carbonate and a non-cyclic carbonate having a low viscosity. In this case, the viscosity of the electrolyte becomes lower than the case of the cyclic carbonate solvent, whereby the high rate discharge characteristic is improved. Moreover, since each carbonate forms a film of Li₂CO₃, the post-storage high rate discharge characteristic is further improved.

When the present invention is applied to a secondary cell, thanks to the formation of the film having a high conductivity, not only the storage characteristic but also the charge and discharge cycle characteristic are improved.

### BRIEF DESCRIPTION OF THE DRAWINGS

These and other objects, advantages and features of the invention will become apparent from the following description thereof taken in conjunction with the accompanying drawings which illustrate specific embodiments of the invention. In the drawings:-
Fig. 1 is a sectional view of a flat type non-aqueous electrolyte cell according to an embodiment of the present invention,
Fig. 2 is a graph showing initial high rate discharge characteristic of Cell A according to the present invention and Comparative Cells X₁ and X₂,
Fig. 3 is a graph showing post-storage high rate discharge characteristics of Cells A, X₁ and X₂,
Fig. 4 is a graph showing relationship between the mixing ratio of ethylene carbonate and dimethyl carbonate and discharge capacity,
Fig. 5 is a graph showing initial high rate discharge characteristics of Cell B and Comparative Cells Y₁ and Y₂,
Fig. 6 is a graph showing post-storage high rate discharge characteristics of Cells B, Y₁ and Y₂,
Fig. 7 is a graph showing initial high rate discharge characteristics of Cell C according to the present invention and Comparative Cells Z₁ and Z₂,
Fig. 8 is a graph showing post-storage high rate discharge characteristics of Cells C, Z₁ and Z₂, and
Fig. 9 is a graph showing relationship between the mixing ratio of propylene carbonate and dimethyl carbonate and discharge capacity.

### DESCRIPTION OF THE PREFERRED EMBODIMENTS

### Embodiment I

### [Example 1]

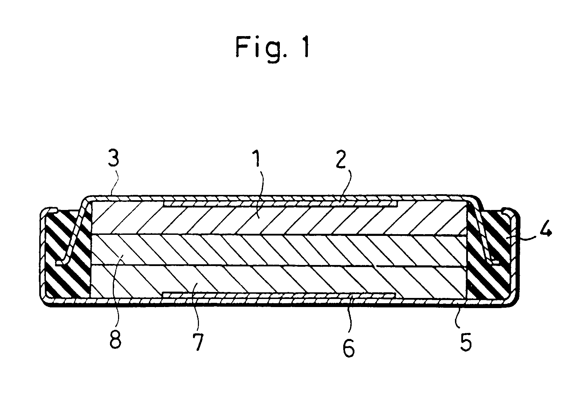

Fig. 1 is a sectional view of a flat type non-aqueous electrolyte primary cell as an embodiment of the present invention.

The cell comprises a negative electrode 1 formed of lithium metal and pressed upon an inner surface of a negative collector 2. The negative collector 2 is secured to an inner bottom surface of a negative can 3 formed of ferritic stainless steel (SUS430). The negative can 3 is peripherally secured in an insulating packing 4 formed of polypropylene, while a positive can 5 is secured peripherally of the insulating packing 4. A positive collector 6 is secured to an inner bottom surface of the positive can 5. A positive electrode 7 is secured to an inner surface of the positive collector 6. A separator 8 impregnated with an electrolyte is disposed between the positive electrode 7 and the negative electrode 1.

The positive electrode 7 was produced as follows. First, manganese dioxide heat-treated in a temperature range of 350-430°C acting as an active material, carbon powder acting as a conductive agent and fluororesin powder acting as a binder were mixed in a weight ratio of 85:10:5. Then, the mixture was molded under pressure and heat-treated at 250-350°C.

The negative electrode 1 was produced by punching a piece having a predetermined size out of a rolled plate of lithium.

The electrolyte was prepared by dissolving lithium phosphate hexafluoride in an equivalent volume solvent mixture of ethylene carbonate and dimethyl carbonate in 1mol/l.

The cell has a diameter of 20.0mm, a height of 2.5mm and a capacity of 130mAh.

The cell manufactured as above is referred to as Cell A, hereinafter.

### [Comparative Example 1]

A cell was manufactured in the same way as Example 1 except that a solvent of ethylene carbonate was employed instead of the solvent mixture of ethylene carbonate and dimethyl carbonate.

The cell manufactured as above is referred to as Cell X₁, hereinafter.

### [Comparative Example 2]

A cell was manufactured in the same way as Example 1 except that an equivalent volume solvent mixture of ethylene carbonate and dimethoxyethane was employed instead of the solvent mixture of ethylene carbonate and dimethyl carbonate.

The cell manufactured as above is referred to as Cell X₂, hereinafter.

### [Experiment 1]

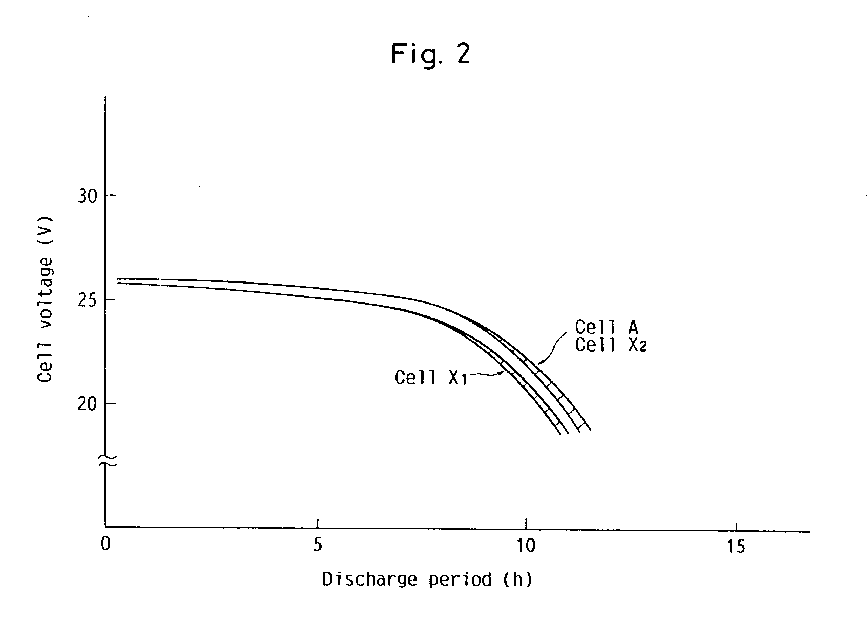

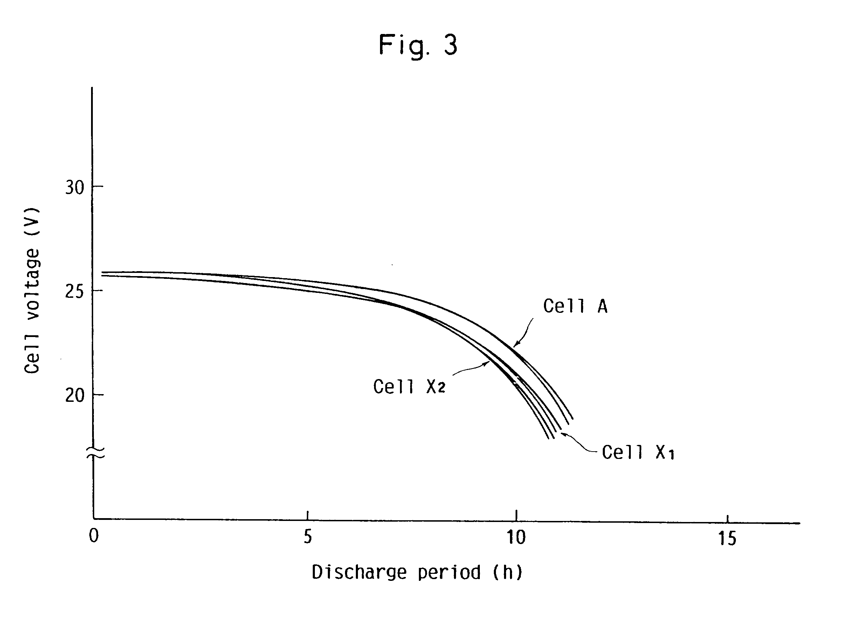

With respect to Cells A, X₁ and X₂, initial high rate discharge characteristics immediately after cell assembly and post-storage high rate discharge characteristics after the cells were stored for 3 months at 60°C were checked. Figs. 2 and 3 respectively show the results. The experiment was conducted under the condition that the cells were discharged with a constant resistance of 300Ω at 25°C.

As apparent from Figs. 2 and 3, Cell A according to the present invention is superior in both initial and post-storage high rate discharge characteristics. In contrast, Cell X₁ is excellent in the post-storage high rate discharge characteristic but is poor in the initial high rate discharge, whereas Cell X₂ is excellent in the initial high rate discharge characteristic but is poor in the post-storage high rate discharge characteristic.

This is considered due to the following reasons.

### 1) Comparative Cell X₁

Cell X₁ employs the solvent consisting of one cyclic carbonate (ethylene carbonate). Therefore, a film of Li₂CO₃ is formed by reaction between lithium of the negative electrode and the solvent as in Cell A of the present invention. This restricts deterioration of the post-storage high rate discharge characteristic. However, due to high viscosity of the electrolyte, the initial high rate discharge characteristic is lowered.

### 2) Comparative Cell X₂

In Cell X₂, the solvent contains a low boiling point solvent(dimethoxyethane). This prevents the viscosity of the electrolyte from being heightened, thereby improving the initial high rate discharge characteristic. However, after long-term storage at a high temperature, the low boiling point solvent reacts on lithium, whereby an inactive film of Li₂O is formed on surfaces of the negative electrode. As a result, the post-storage high rate discharge characteristic is lowered.

### 3) Cell A of the present invention

Since the solvent contains a non-cyclic carbonate (dimethyl carbonate), the viscosity of the electrolyte is prevented from being heightened, resulting in improvement in the initial high rate discharge characteristic. Further, since a film of Li₂CO₃, which does not increase the internal resistance of the cell, is formed, deterioration of the high rate discharge characteristic after long-term storage is restricted.

### [Experiment 2]

An optimum ratio range of ethylene carbonate and dimethyl carbonate was found by checking the relationship between the mixing ratio and discharge capacity. The experiment was conducted under the condition that the cell manufactured in the same way as Cell A was discharged with a constant resistance of 300Ω at 25°C after storage for 3 months at 60°C.

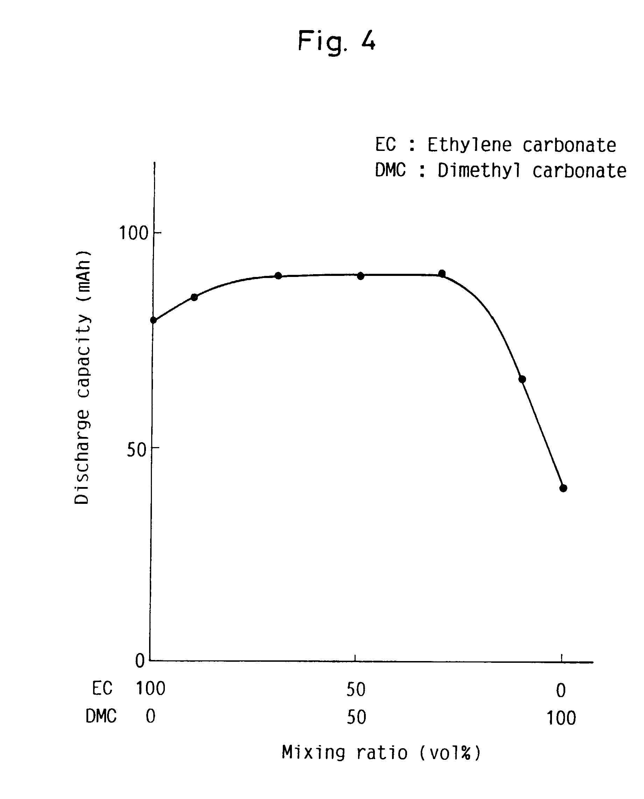

As apparent from Fig. 4, it is preferable that ethylene carbonate is contained in a range of 30-70vol%.

### Comparative Embodiment II

### [Example 1]

A cell was manufactured in the same way as Example 1 of Embodiment I except that lithium trifluoromethane sulfonate was employed as the solute and that an equivalent volume solvent mixture of propylene carbonate and dimethyl carbonate was employed as the solvent.

The cell manufactured as above is referred to as Cell B, hereinafter.

### [Comparative Cell 1]

A cell was manufactured in the same way as the above Example 1 except that a solvent of propylene carbonate was employed.

The cell manufactured as above is referred to as Cell Y₁, hereinafter.

### [Comparative Cell 2]

A cell was manufactured in the same way as the above Example 1 except that an equivalent volume solvent mixture of propylene carbonate and dioxolane was employed.

The cell manufactured as above is referred to as Cell Y₂, hereinafter.

### [Experiment]

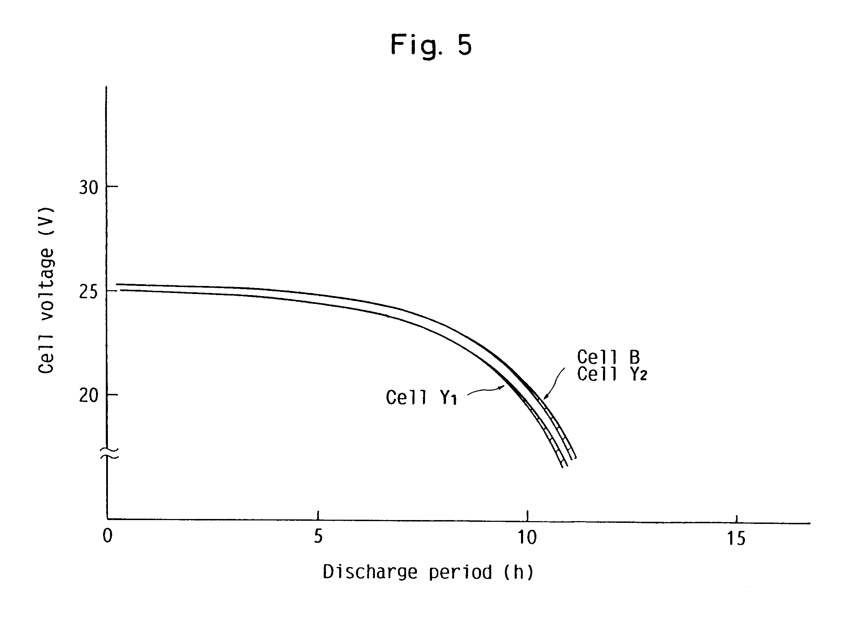

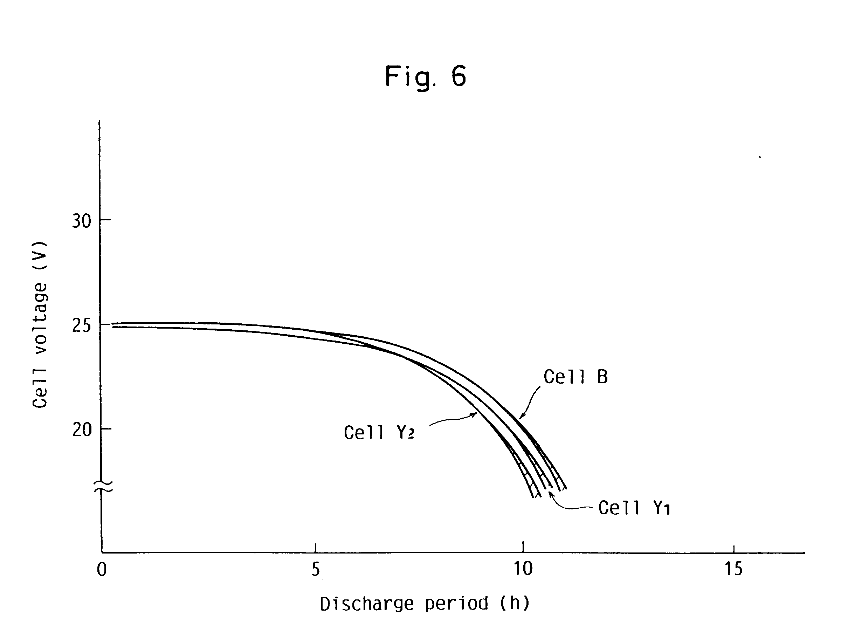

With respect to Cells B, Y₁ and Y₂, initial high rate discharge characteristics and post-storage high rate discharge characteristics were checked. Figs. 5 and 6 show the results. The experiment condition was the same as Experiment 1 of Embodiment I.

As apparent from Figs. 5 and 6, Cell B is superior in both initial and post-storage high rate characteristics. In contrast, Comparative Cell Y₂ is excellent in the initial high rate discharge characteristic but is poor in the post-storage high rate discharge characteristic. Comparative Cell Y₁ is excellent in the post-storage high rate discharge characteristic but is poor in the initial high rate discharge characteristic.

### Embodiment III

### [Example 1]

In this embodiment, the present invention is applied to a secondary cell.

The secondary cell in this embodiment has substantially the same construction as the cell of Fig. 1 except the kinds of an active material for the positive electrode and an electrolyte.

More specifically, rechargeable cobalt oxide is used as the active material for the positive electrode and the electrolyte is prepared by dissolving lithium phosphate hexafluoride in an equivalent volume solvent mixture of propylene carbonate and dimethyl carbonate in 1mol/l.

The cell manufactured as above is referred to as Cell C, hereinafter.

### [Comparative Example 1]

A cell was manufactured in the same way as the above Example 1 except that a solvent of propylene carbonate was employed.

The cell manufactured as above is referred to as Cell Z₁, hereinafter.

### [Comparative Example 2]

A cell was manufactured in the same way as the above Example 1 except that an equivalent volume solvent mixture of propylene carbonate and dimethoxyethane was employed.

The cell manufactured as above is referred to as Cell Z₂, hereinafter.

### [Experiment 1]

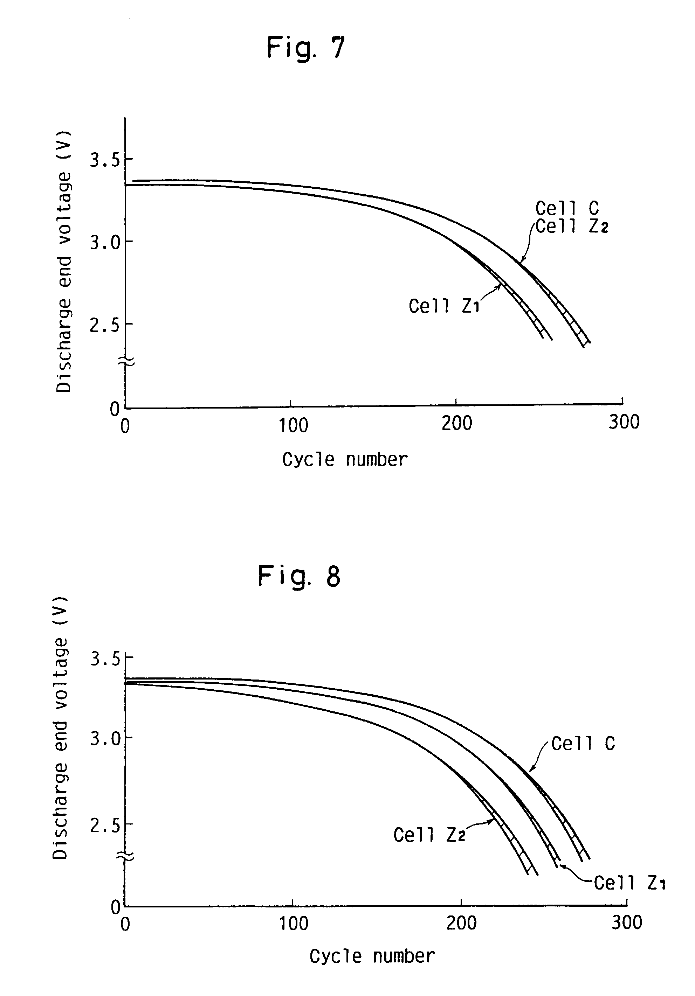

With respect to Cells C, Z₁ and Z₂, initial cycle characteristics immediately after cell assembly and post-storage cycle characteristics after storage for 3 months at 60°C were checked. Figs. 7 and 8 respectively show the results. The experiment was conducted under the condition that the cells were repeatedly charged with a charge current of 2mA for 3 hours and discharged with a discharge current of 2mA for 3 hours until the cell voltages drop to 2.5V.

As apparent from Figs. 7 and 8, Cell C according to the present invention is superior to Comparative Cells Z₁ and Z₂ in both initial and post-storage cycle characteristics.

### [Experiment 2]

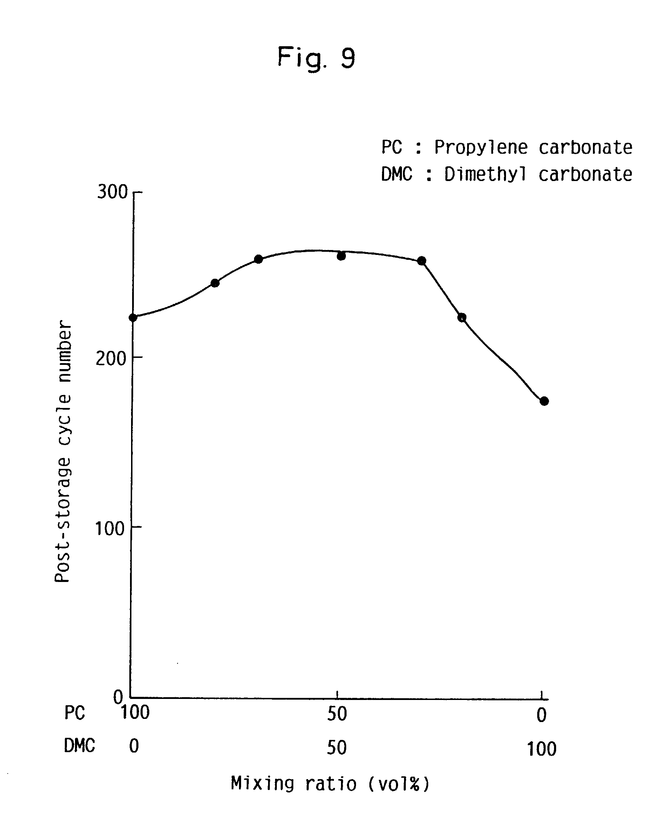

An optimum mixing ratio range of propylene carbonate and dimethyl carbonate was found by checking the relationship between the mixing ratio and the post-storage cycle number. Fig. 9 shows the result.

As apparent from Fig. 9, it is preferable that propylene carbonate is contained in a range of 30-70vol%.

### Other Points

In the above three embodiments, ethylene carbonate or propylene carbonate is employed as the cyclic carbonate. Other cyclic carbonates such as butylene carbonate, vinylene carbonate may also be employed.

In the above embodiments, dimethyl carbonate is employed as the non-cyclic carbonate. Methyl ethyl carbonate may also be employed.

The negative electrode is not limited to lithium metal but may be formed of a lithium alloy such as a lithium-aluminum alloy.

Although the present invention has been fully described by way of embodiments with reference to the accompanying drawings, it is to be noted that various changes and modifications will be apparent to those skilled in the art. Therefore, the scope of the present invention is limited only be the appended claims.

## Claims

1. A non-aqueous electrolyte cell comprising:
a positive electrode composed of manganese oxide or cobalt oxide,
a negative eletrode, and
an electrolyte consisting of LiPF₆ as a solute and a solvent mixture of a cyclic carbonate and a non-cyclic carbonate, the amount of the cyclic carbonate in the solvent being from 30 vol% to 70 vol%,
wherein the non-cyclic carbonate is selected from a group consisting of dimethyl carbonate and methyl ethyl carbonate.

2. A non-aqueous electrolyte cell as claimed in claim 1, wherein the cyclic carbonate is selected from a group consisting of ethylene carbonate, propylene carbonate, butylene carbonate and vinylene carbonate.

3. A non-aqueous electrolyte cell as claimed in claim 1, wherein the negative electrode is formed of either one of lithium and a lithium alloy.

4. A dischargeable non-aqueous electrolyte primary cell comprising:
a positive electrode composed of manganese oxide;
a negative electrode including either one of lithium and a lithium alloy; and
a non-aqueous electrolyte consisting of LiPF₆ as a solute and a solvent mixture of a cyclic carbonate and a non-cyclic carbonate; the amount of the cyclic carbonate in the solvent is from 30 vol% to 70 vol%,
wherein the non-cyclic carbonate is selected from a group consisting of dimethyl carbonate and methyl ethyl carbonate.

5. A non-aqueous electrolyte primary cell as claimed in claim 4, wherein the cyclic carbonate is selected from a group consisting of ethylene carbonate, propylene carbonate, butylene carbonate and vinylene carbonate.

6. A rechargeable non-aqueous electrolyte secondary cell comprising:
a positive electrode composed of cobalt oxide;
a negative electrode including either one of lithium and a lithium alloy; and
a non-aqueous electrolyte consisting of LiPF₆ as a solute and a solvent mixture of a cyclic carbonate and a non-cyclic carbonate; the amount of the cyclic carbonate in the solvent is from 30 vol% to 70 vol%,
wherein the non-cyclic carbonate is selected from a group consisting of dimethyl carbonate and methyl ethyl carbonate.

7. A rechargeable non-aqueous electrolyte secondary cell as claimed in claim 6, wherein the cyclic carbonate is selected from a group consisting of ethylene carbonate, propylene carbonate, butylene carbonate and vinylene carbonate.

## Patentansprüche

1. Zelle mit nichtwässrigem Elektrolyt, mit:
einer positiven Elektrode, bestehend aus Manganoxid oder Kobaltoxid;
einer negativen Elektrode, und
einem Elektrolyt, bestehend aus LiPF₆ als gelöstem Stoff und einem Lösungsmittelgemisch aus einem zyklischen Karbonat und einem nichtzyklischen Karbonat, wobei die Menge des zyklischen Karbonats in dem Lösungsmittel im Bereich von 30 Vol% bis 70 Vol% liegt;
wobei das nichtzyklische Karbonat aus einer Gruppe ausgewählt ist, bestehend aus Dimethylkarbonat und Methylethylkarbonat.

2. Zelle mit nichtwässrigem Elektrolyt nach Anspruch 1, wobei das zyklische Karbonat aus einer Gruppe ausgewählt ist, bestehend aus Ethylenkarbonat, Propylenkarbonat, Butylenkarbonat und Vinylenkarbonat.

3. Zelle mit nichtwässrigem Elektrolyt nach Anspruch 1, wobei die negative Elektrode entweder aus Lithium oder einer Lithiumlegierung gebildet ist.

4. Entladbare Primärzelle mit nichtwässrigem Elektrolyt, mit
einer positiven Elektrode bestehend aus Manganoxid;
einer negativen Elektrode die entweder Lithium oder eine Lithiumlegierung enthält; und
einem nichtwässrigen Elektrolyt, bestehend aus LiPF₆ als gelöstem Stoff und einem Lösungsmittelgemisch aus einem zyklischen Karbonat und einem nichtzyklischen Karbonat;
wobei die Menge des zyklischen Karbonats in dem Lösungsmittel im Bereich von 30 Vol% bis 70 Vol% liegt;
wobei das nichtzyklische Karbonat aus einer Gruppe ausgewählt ist, bestehend aus Dimethylkarbonat und Methylethylkarbonat.

5. Primärzelle mit nichtwässrigem Elektrolyt nach Anspruch 4,
wobei das zyklische Karbonat aus einer Gruppe ausgewählt ist, bestehend aus Ethylenkarbonat, Propylenkarbonat, Butylenkarbonat und Vinylenkarbonat.

6. Wiederaufladbare Sekundärzelle mit nichtwässrigem Elektrolyt, mit
einer positiven Elektrode, bestehend aus Kobaltoxid;
einer negativen Elektrode, die entweder Lithium oder eine Lithiumlegierung enthält; und
einem nichtwässrigen Elektrolyt, bestehend aus LiPF₆ als gelöstem Stoff und einem Lösungsmittelgemisch aus einem zyklischen Karbonat und einem nichtzyklischen Karbonat; wobei die Menge des zyklischen Karbonats im Lösungsmittel im Bereich von 30 Vol% bis 70 Vol% liegt,
wobei das nichtzyklische Karbonat aus einer Gruppe ausgewählt ist, bestehend aus Dimethylkarbonat und Methylethylkarbonat.

7. Wiederaufladbare Sekundärzelle mit nichtwässrigem Elektrolyt nach Anspruch 6,
wobei das zyklische Karbonat aus einer Gruppe ausgewählt ist, bestehend aus Ethylenkarbonat, Propylenkarbonat, Butylenkarbonat und Vinylenkarbonat.

## Revendications

1. Pile à électrolyte non-aqueux comprenant :
une électrode positive composée d'oxyde de manganèse ou d'oxyde de cobalt,
une électrode négative, et
un électrolyte constitué de LiPF₆ en tant que soluté et d'un mélange de solvant d'un carbonate cyclique et d'un carbonate non cyclique, la quantité de carbonate cyclique dans le solvant étant de 30% en volume à 70% en volume,
dans laquelle le carbonate non cyclique est choisi à partir d'un groupe constitué du diméthyle carbonate et du méthyle éthyle carbonate.

2. Pile à électrolyte non-aqueux selon la revendication 1, dans laquelle le carbonate cyclique est choisi à partir d'un groupe constitué du carbonate d'éthylène, du carbonate de propylène, du carbonate de butylène et du carbonate de vinylène.

3. Pile à électrolyte non-aqueux selon la revendication 1, dans laquelle l'électrode négative est formée soit en lithium soit en alliage de lithium.

4. Pile primaire à électrolyte non-aqueux déchargeable comprenant :
une électrode positive composée d'oxyde de manganèse ;
une électrode négative comprenant soit du lithium soit un alliage de lithium ; et
un électrolyte non-aqueux constitué de LiPF₆ en tant que soluté et d'un mélange de solvant d'un carbonate cyclique et d'un carbonate non cyclique ; la quantité de carbonate cyclique dans le solvant étant de 30% en volume à 70% en volume,
dans laquelle le carbonate non cyclique est choisi à partir du groupe constitué du diméthyle carbonate et du méthyle éthyle carbonate.

5. Pile primaire à électrolyte non-aqueux selon la revendication 4, dans laquelle le carbonate cyclique est choisi à partir du groupe constitué du carbonate d'éthylène, du carbonate de propylène, du carbonate de butylène et du carbonate de vinylène.

6. Pile secondaire à électrolyte non-aqueux rechargeable comprenant :
une électrode positive composée d'oxyde de cobalt,
une électrode négative comprenant soit du lithium soit un alliage de lithium ; et
un électrolyte non-aqueux constitué de LiPF₆ en tant que soluté et d'un mélange de solvant d'un carbonate cyclique et d'un carbonate non cyclique ; la quantité de carbonate cyclique dans le solvant étant de 30% en volume à 70% en volume,
dans laquelle le carbonate non cyclique est choisi à partir du groupe constitué du diméthyle carbonate et du méthyle éthyle carbonate.

7. Pile secondaire à électrolyte non-aqueux rechargeable selon la revendication 6, dans laquelle le carbonate cyclique est choisi à partir d'un groupe constitué du carbonate d'éthylène, du carbonate de propylène, du carbonate de butylène et du carbonate de vinylène.
